# EUROPÄISCHE PATENTANMELDUNG

(11) **EP 1 983 274 A2**
(43) Veröffentlichungstag der Anmeldung: **22.10.2008**
(21) Anmeldenummer: 08007295.2
(22) Anmeldetag: 14.04.2008
(51) Int. Cl.: F24J 3/08

(54) **Erdsonde zur Aufnahme von thermischer Energie aus dem Erdreich und/oder zur Abgabe von thermischer Energie an das Erdreich**

(30) Priorität: 17.04.2007 AT 5892007
(71) Anmelder: A & S Umwelttechnologie AG, 9050 Appenzell (CH)
(72) Erfinder: Amann, Armin, Ing., 6824 Schlins (AT); Sonderegger, Wilhelm, Dr., 6850 Dornbirn (AT)
(74) Vertreter: Hofmann, Ralf U.

(57) **Zusammenfassung**

Bei einer Erdsonde zur Aufnahme von thermischer Energie aus dem Erdreich (12) und/oder zur Abgabe von thermischer Energie an das Erdreich (12), mit einem Außenrohr (1) und einem am unteren Ende des Außenrohrs (1) angeordneten und einen inneren Hohlraum (40) der Erdsonde verschließenden Sondenfuß (2), der in das Erdreich (12) eindrückbar und/oder einschlagbar ist, ist der Sondenfuß (2) mit dem Außenrohr (1) in axialer Richtung des Außenrohrs (1) verschiebbar verbunden.

## Beschreibung

Die Erfindung bezieht sich auf eine Erdsonde zur Aufnahme von thermischer Energie aus dem Erdreich und/oder zur Abgabe von thermischer Energie an das Erdreich, mit einem Außenrohr und einem am unteren Ende des Außenrohrs angeordneten und einen inneren Hohlraum der Erdsonde verschließenden Sondenfuß, der in das Erdreich eindrückbar und/oder einschlagbar ist.

Erdsonden zur Aufnahme von thermischer Energie aus dem Erdreich und/oder zur Abgabe von thermischer Energie an das Erdreich, welche im Gegensatz zu Flächenkollektoren in die Tiefe des Erdreichs ragen, sind in unterschiedlichen Ausführungsformen bekannt. Beispielsweise sind Erdsonden bekannt, die in ein in die Erde eingebrachtes Bohrloch eingesetzt werden, worauf der Zwischenraum zwischen dem Bohrloch und der Erdsonde mit einem Füllmaterial ausgegossen wird, welches in der Folge aushärtet. Bekannt sind auch in einen Hohlraum eingebrachte Erdsonden, der in einem in das Erdreich eingebrachten Bauteil vorhanden ist, beispielsweise in einem eingerammten Stahl- oder Betonrohr, einem eingerammten Piloten oder einem Fundament. Auch in Ortbeton eingebrachte Erdsonden sind bekannt.

Weiters sind in das Erdreich eindrück- und/oder einschlagbare Erdsonden bekannt. Eine derartige Erdsonde der eingangs genannten Art geht beispielsweise aus der EP 1 486 741 B1 hervor. Ein Außenrohr, das aus mehreren zusammengesteckten Rohrstücken besteht, wird durch Einrammen in das Erdreich abgeteuft. In das in das Erdreich eingebrachte Außenrohr wird in der Folge ein Auskleidungsrohr eingesetzt. Der Zwischenraum zwischen dem Außenrohr und dem Auskleidungsrohr wird in der Folge mit einem flüssigen, aushärtbaren Füllmaterial ausgegossen. Im Weiteren wird ein bereits fertig montiertes Innenrohr in das Auskleidungsrohr eingesetzt. Das Innenrohr bildet die Hinleitung für ein Wärmeträgermedium, während der Zwischenraum zwischen dem Innenrohr und dem Auskleidungsrohr die Rückleitung für das Wärmeträgermedium bildet. Im Hinblick auf das Einrammen des Außenrohrs wird dieses von einem entsprechend stabilen Metallrohr gebildet, was zu relativ hohen insgesamten Herstellungskosten der Erdsonde führt. Auch ist die Fertigstellung der in das Erdreich eingebrachten Erdsonde mit einem erheblichen auf der Baustelle zu erbringenden Montageaufwand verbunden.

Aus der US 4,286,651 A ist ein Verfahren zum Einbringen einer Erdsonde in den Untergrund bekannt, bei dem ein Sondenfuß mittels eines Vortriebsrohres in den Untergrund eingebracht wird. Anschließend wird die Erdsonde in den Innenhohlraum des Vortriebsrohres eingeführt und am Sondenfuß verankert, woraufhin dann das Vortriebsrohr wieder gezogen wird, bevor die Erdsonde in Betrieb gehen kann.

Neben sogenannten "Koaxialsystemen", bei denen die Hin- und Rückleitung durch ineinander liegende, insbesondere koaxial angeordnete Rohre ausgebildet werden, sind sogenannte "U-Sonden" bekannt, bei welchen die Hin- und Rückleitungen von nebeneinander angeordneten Rohren gebildet werden. Neben Einfach-U-Sonden mit einer einzigen Hin- und Rückleitung sind Doppel-U-Sonden mit zwei Hin- und zwei Rückleitungen bekannt. U-Sonden gehen beispielsweise aus der EP 582 118 A1 und EP 1 006 322 A2 hervor. Bei der U-Sonde der letztgenannten Schrift wird zum Einbringen der Erdsonde in das Erdreich zunächst ein aus mehreren Rohrstücken zusammengesetztes Rohr in das Erdreich eingerammt. In den inneren Hohlraum des eingerammten Rohrs wird das Leitungssystem eingebracht und mit einem Endstück am unteren Ende des eingerammten Rohrs verbunden. Das eingerammte Rohr wird in der Folge, abgesehen vom Endstück, wieder aus dem Erdreich herausgezogen. Nachteilig hierbei ist es, dass je nach Bodenverhältnissen ein sehr hoher Kraftaufwand für das Zurückschieben des Rohrs erforderlich ist.

Aufgabe der Erfindung ist es, die Herstellungskosten für eine Erdsonde der eingangs genannten Art zu senken. Erfindungsgemäß gelingt dies durch eine Erdsonde mit den Merkmalen des Patentanspruchs 1.

Durch die Verschiebbarkeit des Sondenfußes gegenüber dem Außenrohr wird es ermöglicht, die Erdsonde in das Erdreich einzubringen, indem auf den Sondenfuß vom Inneren der Erdsonde her eingewirkt wird. Dieses Einwirken umfasst im Allgemeinen zumindest über einen Teil der Einbringungsstrecke ein schlagendes Einwirken. Im ersten Abschnitt des Einbringens kann je nach Bodenverhältnissen auch ein rein drückendes Einwirken angewandt werden. Andererseits kann die Erdsonde auch über die gesamte Einbringungsstrecke eingeschlagen werden. Manche Bodenverhältnisse können auch ein reines Eindrücken ermöglichen.

Durch die aufgrund der Verschiebbarkeit des Sondenfußes gegenüber dem Außenrohr erreichte Entkopplung zwischen diesen Teilen wird die auf den Sondenfuß beim Einbringen der Erdsonde in das Erdreich einwirkende Kraft nicht bzw. nur zu einem geringen Anteil auf das Außenrohr übertragen, so dass die Stabilitätsanforderungen an das Außenrohr gering gehalten werden können. Das Außenrohr kann, ohne dass hierfür die hohe für die Einbringung des Sondenfußes nötige Kraft erforderlich wäre, in das vom Sondenfuß ausgebildete Loch nachgedrückt werden. Vorteilhafterweise ist hierbei der Durchmesser des Sondenfußes größer als der Durchmesser des Außenrohrs, so dass ein Nachdrücken des Außenrohrs mit einer relativ geringen Nachdrückkraft ermöglicht wird und sich ein Zwischenraum zwischen dem Außenrohr und dem Erdreich bildet, in den beim Einbringen der Erdsonde eine Stützflüssigkeit eingefüllt werden kann. Günstigerweise handelt es sich hierbei um ein sich in seinem flüssigen Zustand befindendes Füllmaterial, welches aushärten kann, so dass es im fertig gestellten Zustand der Erdsonde den thermischen Kontakt zwischen dem Erdreich und der Erdsonde vermittelt.

Eine gattungsgemäße Erdsonde, die auch als pfahlförmiger Wärmetauscher bezeichnet werden kann, ragt in die Tiefe des Erdreichs, vorzugsweise senkrecht bzw. in einem Winkelbereich von bis zu 70° gegenüber der Vertikalen. Abweichende Einbringungswinkel gegenüber der Vertikalen können auch in Abhängigkeit von den Verhältnissen, beispielsweise bei Hangneigungen, vorteilhaft vorgesehen sein.

Zum Einbringen der Erdsonde in das Erdreich kann in einem Ausführungsbeispiel der Erfindung auf den Sondenfuß mittels einer durch das Außenrohr eingeführten Innenrammstange eingewirkt werden, auf die an ihrem aus dem oberen Ende des Außenrohr herausragenden Ende drückend und/oder schlagend eingewirkt wird, vorzugsweise zumindest über einen Teil der Einbringungsstrecke der Erdwärmesonde schlagend.

Ramm- bzw. Vibriereinrichtungen zum Einbringen von Erdsonden in das Erdreich sind bekannt. Solche Einrichtungen besitzen ein pneumatisch, hydraulisch oder elektrisch betriebenes Schlagwerk mit niedriger bis hoher Arbeitsfrequenz. Bei einer niedrigen Arbeitsfrequenz wird auch von einem "Einrammen" bei einer hohen Arbeitsfrequenz auch von einem "Einvibrieren" gesprochen. Auch ist bei einer niedrigen Arbeitsfrequenz, also beim "Einrammen" die Amplitude größer als bei einer hohen Arbeitsfrequenz, also beim "Einvibrieren". Wenn im Rahmen der vorliegenden Schrift von "schlagendem Einwirken" bzw. "Einschlagen" die Rede ist, so sind hierbei alle Frequenzbereiche und Amplitudenbereiche als umfasst anzusehen. Von solchen Ramm- oder Vibriereinrichtungen kann üblicherweise auch eine kontinuierliche Druckkraft aufgebracht werden.

In einer weiteren Ausführungsform der Erfindung erfolgt das Einbringen der Erdsonde in das Erdreich, indem auf den Sondenfuß mittels eines in das Außenrohr eingeführten Schlagwerks eingewirkt wird. Dieses Schlagwerk kann an einer Stange angebracht sein, die vorzugsweise aus mindestens zwei lösbar miteinander verbindbaren Stangenstücken besteht, um es mittels der Stange durch das Außenrohr bis zum Sondenfuß zu führen. Günstigerweise weist die Stange einen durchgehenden inneren Kanal zur Zuführung der Druckluft zu einem, vorzugsweise pneumatisch arbeitenden, Schlagwerk auf. Die Stange kann hierfür rohrförmig ausgebildet sein. Auch hydraulisch oder elektrisch betriebene Schlagwerke sind denkbar und möglich, wobei dann der die Schlagenergie bewirkende Energieträger ebenfalls über ein entsprechend ausgestaltetes Gestänge zugeführt wird.

Ein zu diesem Zweck sich eignendes Schlagwerk in besonders schlanker Bauform kann einen Aufbau ähnlich einer herkömmlichen Bodendurchschlagsrakete aufweisen. Die Arbeitsfrequenz kann wiederum niedrig bis hoch sein.

Bevorzugterweise ist vorgesehen, dass beim Einbringen der Erdsonde in das Erdreich auf das Außenrohr, vorzugsweise im Bereich von dessen oberem Ende, eine, insbesondere kontinuierliche, Nachdrückkraft ausgeübt wird. Beim Einbringen der Erdsonde in das Erdreich wird günstigerweise eine Stützflüssigkeit in einen zwischen dem Außenrohr und dem Erdreich aufgrund des größeren äußeren Durchmessers des Sondenfußes im Vergleich zum Außendurchmesser des Außenrohrs sich bildenden Zwischenraum eingebracht, die in der Folge sich verfestigt bzw. aushärtet und ein Füllmaterial zur Herstellung eines thermischen Kontaktes zwischen dem Erdreich und dem Außenrohr bildet.

Vorzugsweise ist eine Erdsonde gemäß der Erfindung nach Art einer Koaxialsonde ausgebildet, d. h. das Leitungssystem der Erdsonde zur Hinleitung des Wärmeträgermediums zum unteren Ende der Sonde und zur Rückleitung des Wärmeträgermediums zum oberen Ende der Sonde wird vom Innenraum eines innerhalb des Außenrohrs verlaufenden Innenrohrs sowie vom Zwischenraum zwischen dem Innenrohr und dem Außenrohr gebildet, der im Bereich des unteren Endes der Erdsonde mit dem Innenraum des Innenrohrs verbunden ist. Am einfachsten kann zur Herstellung dieser Verbindung das Innenrohr im Abstand oberhalb des unteren Endes des vom Fußstück verschlossenen inneren Hohlraums der Erdsonde enden.

Zur Ausbildung der in das Erdreich eingebrachten Erdsonde kann hierbei zunächst das Außenrohr mit dem Sondenfuß in das Erdreich eingebracht werden und erst danach das Innenrohr in das Außenrohr eingebracht werden.

Weitere Vorteile und Einzelheiten der Erfindung werden im Folgenden anhand der beiliegenden Zeichnung erläutert. In dieser zeigen:
- Fig. 1: eine schematische Darstellung des in das Erdreich eingebrachten Außenrohrs mit dem Sondenfuß, wobei sich die Innenrammstange noch im Außenrohr befindet;
- Fig. 2: eine Darstellung entsprechend Fig. 1, aber die Innenrammstange herausgezogen und eine Beschwerungskappe auf das Außenrohr aufgesetzt;
- Fig. 3: eine schematische Darstellung der fertig montierten Erdsonde;
- Fig. 4: einen vergrößerten Längsmittelschnitt eines unteren Endabschnitts des Außenrohrs mit dem Sondenfuß, die Innenrammstange eingeführt;
- Fig. 5: einen nochmals vergrößerten Ausschnitt aus Fig. 4 im Bereich der Abdichtung zwischen dem Außenrohr und dem Sondenfuß;
- Fig. 6: einen Längsmittelschnitt analog Fig. 4, aber in einem mittleren Bereich des Außenrohrs;
- Fig. 7: einen Längsmittelschnitt des Außenrohrs und des darin eingebrachten Innenrohrs in einem mittleren Abschnitt der Erdsonde;
- Fig. 8: eine schematische Darstellung einer Einrichtung zum Einschlagen und Eindrücken der Erdsonde;
- Fig. 9: eine schematische Darstellung einer alternativen Einrichtung zum Einschlagen des Sondenfußes.

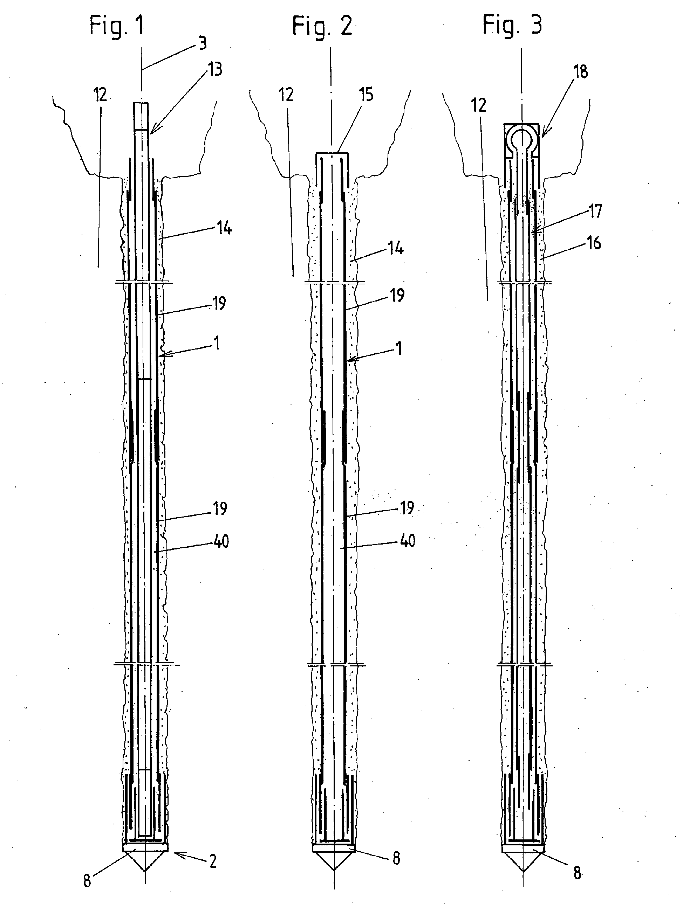

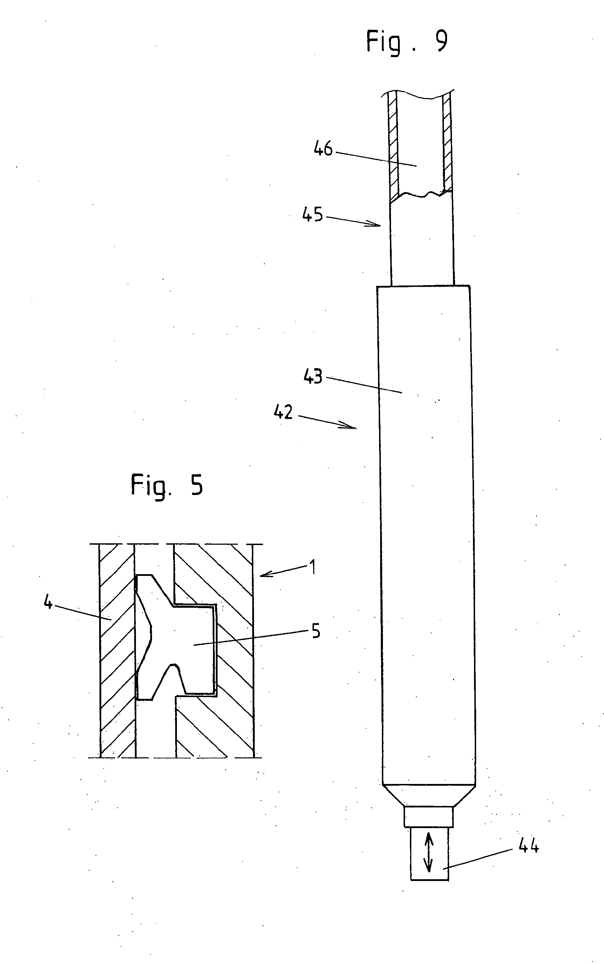

Aus den Fig. 1 bis 8 geht ein Ausführungsbeispiel einer Erdsonde gemäß der Erfindung hervor. Die Erdsonde umfasst ein Außenrohr 1 und einen mit dem unteren Ende des Außenrohrs verbundenen Sondenfuß 2. Der Sondenfuß 2 ist gegenüber dem Außenrohr 1 in Richtung der Längsachse 3 des Außenrohrs 1 begrenzt verschiebbar. Zur Ausbildung eines zum unteren Ende der Erdsonde hin abgedichteten inneren Hohlraums 40 der Erdsonde ist die verschiebbare Verbindung des Sondenfußes 2 gegenüber dem Außenrohr 1 abgedichtet. Im gezeigten Ausführungsbeispiel weist hierzu der Sondenfuß 2 ein in den unteren Endabschnitt des Außenrohrs 1 ragendes Rohrstück 4 auf, das gegenüber dem Außenrohr 1 mittels einer Dichtung 5 abgedichtet ist. Die Dichtung 5 kann beispielsweise in der in Fig. 5 dargestellten Weise ausgebildet sein, um gegenüber in beide Richtungen wirkenden Drücken abdichten zu können. Beim Einbringen der Erdsonde in das Erdreich 12 wirkt ein Druck von außen nach innen, im Betriebszustand wird vom die Erdsonde durchströmenden Wärmeträgermedium ein Druck von innen nach außen ausgeübt. Die am Außenrohr 1 gehaltene Dichtung 5 besitzt für die Abdichtung in beide Richtungen eine schräg nach oben und eine schräg nach unten verlaufende Dichtlippe, die jeweils an der äußeren Oberfläche des Rohrstücks 4 anliegen.

Ein näher am unteren Ende des Außenrohrs 1 an diesem angebrachter Dichtring 6, der an der äußeren Oberfläche des Rohrstücks 4 anliegt, dient, einerseits als Führung und andererseits zum Abstreifen und Abhalten der Stützflüssigkeit und von Schmutz.

Das Rohrstück 4 ist an seinem unteren Ende durch eine Fußplatte 7 verschlossen.

Weiters umfasst der Sondenfuß 2 ein unterhalb der Fußplatte 7 sich befindendes Verdrängungsstück 8, dessen Ausbildung vom Boden, in den die Erdsonde einzubringen ist, abhängen kann und das beispielsweise wie dargestellt eine nach unten spitz zulaufende Form besitzen kann.

Um den Eintritt der Stützflüssigkeit und von Verschmutzungen in den Spalt zwischen dem Außenrohr 1 und dem Rohrstück 4 zusätzlich zu erschweren, ist am Verdrängungsstück 8 ein Rohrfortsatz 9 angebracht, der sich in allen möglichen Verschiebepositionen des Sondenfußes 2 über einen - mehr oder weniger langen - Endabschnitt des Außenrohrs 1 erstreckt, und zwar mit einem geringen Spiel zwischen dem Außenrohr 1 und dem Rohrfortsatz 9 und/oder einer zwischen diesen angeordneten Dichtung.

Die Verschiebbarkeit des Sondenfußes 2 gegenüber dem Außenrohr 1 ist nach unten und nach oben durch Anschläge begrenzt. Zur Begrenzung der Verschiebung nach oben dient im gezeigten Ausführungsbeispiel die Fußplatte 7, deren Durchmesser größer als der Außendurchmesser des Rohrstücks 4 ist und die beim Hinaufschieben des Sondenfußes 2 am unteren Ende des Außenrohrs 1 stirnseitig anschlägt. Die Begrenzung der Verschiebung des Sondenfußes 2 nach unten erfolgt im gezeigten Ausführungsbeispiel durch einen vom Rohrstück 4 nach außen abstehenden Bund 10, der an einer Stirnfläche 11 einer Durchmesserverjüngung des Außenrohrs 1 zum Anschlag kommt. Diese Durchmesserverjüngung des Außenrohrs 1 dient auch zur Führung des Rohrstücks 4.

Das Einbringen des Außenrohrs 1 mit dem damit verbundenen Sondenfuß 2 in das Erdreich 12 erfolgt im gezeigten Ausführungsbeispiel über eine Innenrammstange 13. Diese ist durch das Außenrohr 1 bis zum Sondenfuß 2 eingeführt und wird am oberen Ende wie weiter unten noch genauer erläutert durch ein Schlagwerk beaufschlagt.

Durch die von der Innenrammstange 13 übertragenen Schläge wird der Sondenfuß 2 schrittweise eingeschlagen (bei niedriger Frequenz eingerammt oder bei hoher Frequenz einvibriert). Durch das Verdrängungsstück 8 wird hierbei Material des Erdreichs 12 verdängt. Entweder wird dadurch ein Loch gebildet oder ein mit geringerem Durchmesser vorgebohrtes Loch wird aufgeweitet. In das vom Verdrängungsstück 8 gebildete oder aufgeweitete Loch wird das Außenrohr 1 nachgedrückt. Beispielsweise kann es kontinuierlich mit einer Nachdrückkraft beaufschlagt sein, so dass es zwischen den von der Innenrammstange 13 übertragenen Schlägen bis zum Anschlag am Sondenfuß 2 gedrückt ist und sich nur nach einem ausgeführten Schlag kurz von diesem Anschlag abhebt.

Der äußere Durchmesser D des Verdrängungsstücks 8 ist größer als der äußere Durchmesser d des Außenrohrs 1. Es bildet sich dadurch ein Zwischenraum zwischen dem Außenrohr 1 und dem Erdreich 12. Um diesen Zwischenraum aufrechtzuerhalten wird Stützflüssigkeit 14 eingebracht. Diese Einbringung kann beispielsweise vom oberen Ende des ausgebildeten Lochs aus erfolgen. Denkbar und möglich wäre es beispielsweise auch am Außenrohr einen oberhalb des Sondenfußes 2 mündenden Schlauch zu befestigen, durch den die Stützflüssigkeit 14 zugeführt wird.

Durch die Innenrammstange 13 können mehrere Aufgaben erfüllt werden: Zum Einen kann ein auf die Innenrammstange 13 ausgeübter Druck und/oder eine auf die Innenrammstange 13 ausgeübte Schlagenergie auf das Innere des mechanisch robust ausgebildeten Sondenfußes 2 übertragen werden. Weiters kann eine geradlinige Führung beim Vortrieb des Sondenfußes 2 und Außenrohrs 1 bewirkt werden, sodass die vorgegebene Linie des Einbringens (vertikal oder zur Vertikalen um bis zu 70° geneigt) eingehalten wird. Durch die Innenrammstange 13 kann weiters ein Ausknicken des Außenrohrs 1 verhindert werden. Das Außenrohr 1 hat durch die Wirkung der Nachschiebekraft die Tendenz auszuknicken und dies kann durch eine entsprechend stabile Ausbildung der Innenrammstange 13, beispielsweise als dickwandiges Rohr aus Stahl, verhindert werden. Das Außenrohr 1 muss dadurch nicht selbst diese Stabilität aufweisen und kann vorzugsweise aus Kunststoff ausgebildet sein. Weiters kann von der Innenrammstange ein Gewicht zur Kompensation des Auftriebs bis zur ausreichenden Aushärtung der Stützflüssigkeit 14 bereitgestellt werden.

Der fertig in das Erdreich 12 eingebrachte Zustand des Außenrohrs 1 mit dem Sondenfuß 2 ist in Fig. 1 dargestellt. Die Innenrammstange 13 ist hierbei noch eingeführt. Es könnte nunmehr zugewartet werden, bis die Stützflüssigkeit 14 ausreichend ausgehärtet ist, bevor die Innenrammstange 13 entnommen wird, damit das Außenrohr 1 nicht durch den Auftrieb hinaufgedrückt wird. Stattdessen kann auch eine ein zentrales Loch zum Durchtritt der Innenrammstange aufweisende Beschwerungskappe 15 auf das obere Ende des Außenrohrs 1 aufgesetzt werden, worauf die Innenrammstange 13 noch im flüssigen Zustand der Stützflüssigkeit 14 entnommen werden kann, vgl. Fig. 2.

Die verfestigte bzw. ausgehärtete Stützflüssigkeit 14 bildet ein im Zwischenraum zwischen dem Außenrohr 1 und dem Erdreich 12 sich befindendes Füllmaterial 16, welches einen guten thermischen Kontakt zwischen dem Erdreich 12 und dem Außenrohr 1 vermittelt. Das Füllmaterial 16 kann dabei auch im verfestigten bzw. ausgehärteten Zustand eine ausreichende Elastizität oder Fließfähigkeit aufweisen, um auch längerfristig ein Auftreten von Spalten durch Verschiebungen oder Setzungen im Erdreich zu vermeiden, wie dies bekannt ist.

In der Folge wird in das Außenrohr 1 ein Innenrohr 17 eingebaut, um das Leitungssystem der Erdsonde auszubilden. Weiters wird vorzugsweise ein Sondenkopf 18 aufgesetzt, um das Leitungssystem der Erdsonde mit Zuführ- und Abführleitungen für das Wärmeträgermedium zu verbinden.

Im gezeigten Ausführungsbeispiel wirkt die Innenrammstange 13 über die Fußplatte 7 auf das Verdrängungsstück 8. Der Sondenfuß 2 besteht somit einerseits aus der das Rohrstück 4 und die Fußplatte 7 umfassenden Einheit, die aus korrosionsbeständigem, stabilen Werkstoff, insbesondere Edelstahl, ausgebildet ist, andererseits aus der das Verdrängungsstück 8 und den Rohrfortsatz 9 umfassenden Einheit. Letztere Einheit muss aus ausreichend stabilem nicht aber notwendigerweise aus korrosionsbeständigem Material bestehen. Vorzugsweise wird normaler Stahl eingesetzt.

Die Ausbildung des Sondenfußes 2 kann in verschiedener Weise modifiziert werden. Beispielsweise könnte das Rohrstück 4 auch das Außenrohr 1 umgeben. Der Rohrfortsatz 9 könnte insbesondere bei dieser Ausbildung auch entfallen und das Verdrängungsstück 8 direkt an der Fußplatte 7 angebracht sein. Weiters könnte die Fußplatte 7 selbst als Verdrängungsstück ausgebildet sein, so dass ein separates Verdrängungsstück entfallen könnte. Weniger bevorzugt ist dies aufgrund des höheren Verbrauchs an teurerem korrosionsbeständigen Material.

Die Anschläge zur Begrenzung der Verschiebbarkeit des Sondenfußes 2 gegenüber dem Außenrohr 1 nach oben und nach unten könnten auch in anderer Weise ausgebildet sein.

Das Außenrohr 1 kann zwei oder mehr Außenrohrstücke 19 umfassen. Vorteilhafterweise sind diese durch eine kraft- und/oder formschlüssige Verbindung miteinander verbunden, wobei eine Steckverbindung bevorzugt ist. Besonders bevorzugt ist eine selbstverrastende Steckverbindung. Beispielsweise kann hierzu wie dargestellt das eine Ende der zu verbindenden Außenrohrstücke 19 Rastzungen 21 mit Rastnasen 22 aufweisen, die in eine Nut 23 am anderen Ende des eingesteckten Außenrohrstücks 19 eingreifen. Die Rastzungen 21 können beispielsweise durch axiale Einschnitte in den Endabschnitten des Außenrohrstücks 19 ausgebildet werden. Zur Verstärkung der Federkraft kann gegebenenfalls ein die Rastzungen umgebender Federring 24 vorgesehen sein. Gegenüber den Rastzungen 21 weiter in Richtung zur Rohrstückmitte befindet sich ein Dichtring 20 zur gegenseitigen Abdichtung der endseitig ineinander eingesteckten Außenrohrstücke 19, wobei der Dichtring 20 an einem der Außenrohrstücke 19 gehalten ist.

Das in das Außenrohr 1 einzusetzende Innenrohr 17 kann zwei oder mehr Innenrohrstücke 25 umfassen. Die Verbindung zwischen den Innenrohrstücken 25 ist vorteilhafterweise kraft- und/oder formschlüssig ausgebildet. Vorzugsweise ist die Verbindung als Steckverbindung ausgebildet, wobei eine selbstverrastende Steckverbindung besonders bevorzugt ist. Beispielsweise können die Innenrohrstücke 25 am einen Endbereich Rastzungen 26 mit Rastnasen 27 aufweisen, die in eine Nut 28 am anderen Ende des eingesteckten Innenrohrstücks 25 eingreifen. Ein die Nut 28 aufweisendes Endstück des Innenrohrstücks 25 kann hierbei einen geringeren Durchmesser als das Innenrohrstück 25 über seine übrige Länge aufweisen, beispielsweise durch ein eingeschweißtes Stück eines Rohres mit einem geringeren Durchmesser. Dieses Endstück mit dem geringeren Durchmesser erstreckt sich über den Verbindungsbereich zwischen zwei Außenrohrstücken 19, in welchem der Innendurchmesser des Außenrohrs 1 verringert ist. Dadurch wird in diesem Verbindungsbereich zwischen den Außenrohrstücken 19 ein ausreichender Durchlassquerschnitt für den Durchtritt des Wärmeträgermediums erreicht.

Zwischen miteinander verbundenen Innenrohrstücken 25 muss keine Dichtung vorgesehen werden. Eine vollständige Dichtheit dieser Verbindung ist nicht erforderlich.

Der Sondenkopf 18 besitzt Anschlüsse zur Verbindung mit den oberen Enden des obersten Außenrohrstücks 19 und des obersten Innenrohrstücks 25. Zuerst wird die Verbindung mit dem Innenrohrstück 25 hergestellt und in der Folge wird der Sondenkopf 18 mit dem Außenrohrstück 19 verbunden. Diese Verbindungen können in der gleichen Weise ausgebildet sein wie die Verbindungen zwischen den Außenrohrstücken 19 bzw. den Innenrohrstücken 25 untereinander.

Die Innenrammstange 13 kann zwei oder mehr durch eine lösbare Verbindung miteinander verbundene Stangenstücke 29 umfassen. Die Stangenstücke 29 sind als dickwandige Rohre - vorzugsweise aus Stahl - ausgebildet. In das untere Ende eines jeweiligen Stangenstücks 29 ist ein Zapfen 30 eines Verbindungsstücks 31 eingepresst. Dieses Verbindungsstück 31 besitzt weiters anschließend an das untere Ende des Stangenstücks 29 einen kurzen Abschnitt 32 mit einem Außengewinde, der in ein Innengewinde am oberen Ende des nächstunteren Stangenstücks 29 eingeschraubt ist. Weiters ragt ein relativ langer Zapfen 33 in das obere Ende des unteren Stangenstücks 29, um eine ausreichende Stabilität gegen ein Verbiegen bzw. Ausknicken im Verbindungsbereich zu erreichen. Durch die Schraubverbindung zwischen den Stangenstücken 29 wird u. a. ein Zurückziehen der Innenrammstange 13 ermöglicht, nachdem das Außenrohr 1 mit dem Sondenfuß 2 in das Erdreich 12 eingebracht worden ist.

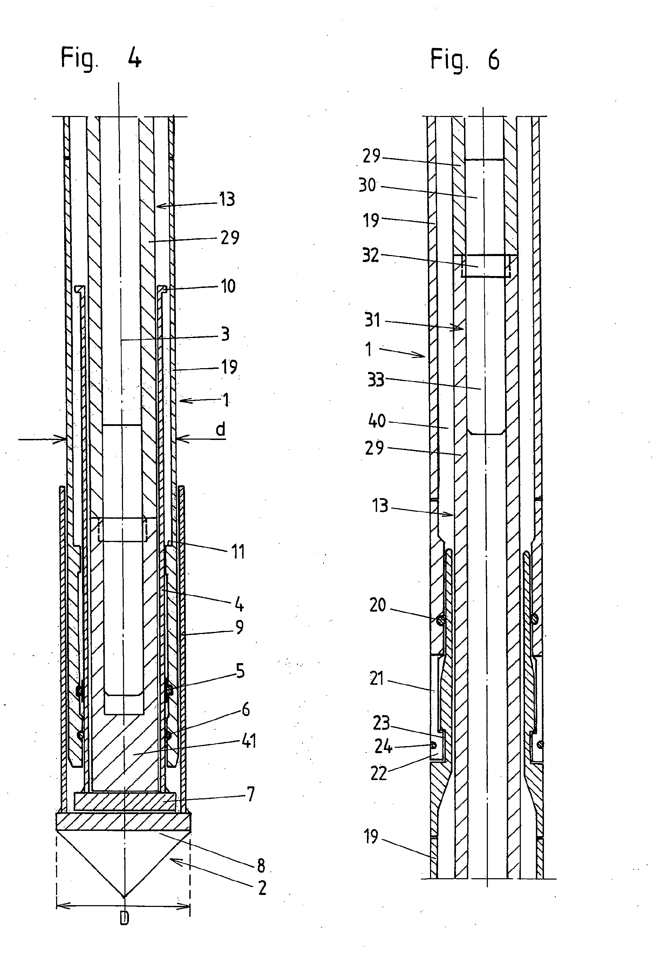

Das unterste Stangenstück 41 ist am unteren Ende vorzugsweise massiv ausgebildet, vgl. Fig. 4.

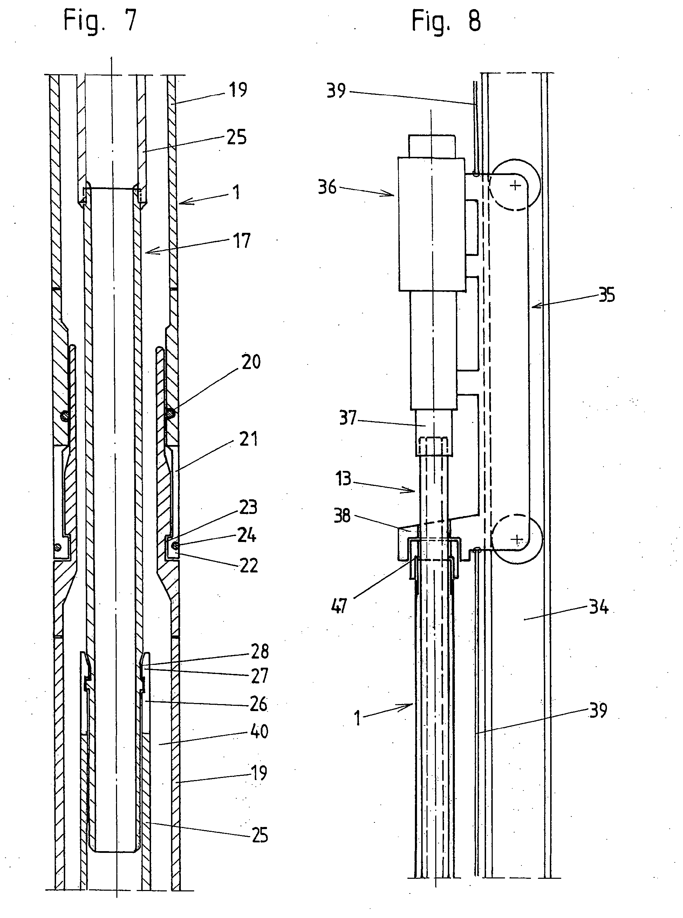

Eine Einrichtung zum Einschlagen und Eindrücken des Außenrohrs 1 mit dem Sondenfuß 2 ist in Fig. 8 schematisch dargestellt. An einer vertikalen Führungsschiene (= Lafette) 34 ist ein Schlitten 35 verfahrbar angeordnet. Der Schlitten 35 trägt ein Schlagwerk 36, dessen Schlagstück 37 auf das obere Ende der Innenrammstange 13 einwirkt. Am Schlitten 35 ist weiters ein Haltestück 38 angebracht, welches das obere Ende des Außenrohrs 1 hält, gegebenenfalls über eine Passhülse 47, die auf das obere Ende des Außenrohrs 1 aufgesetzt ist. Dadurch wird einerseits das Außenrohr 1 geführt, andererseits wird eine Nachdrückkraft auf das Außenrohr 1 ausgeübt, und zwar mittels eines am Schlitten 35 angreifenden Zugelements 39, beispielsweise einer Kette. Auch die Andrückkraft für das Schlagwerk 36 wird über das am Schlitten 35 angreifende Zugelement 39 ausgeübt. Die Führungsschiene kann natürlich auch in einem abweichenden Winkel zur Senkrechten positioniert werden, um die Erdsonden in der vorgesehenen Position einzubringen.

In ähnlicher Weise ausgebildete Ramm- bzw. Vibriereinrichtungen sind zum Einbringen von herkömmlichen Erdsonden bekannt. Das Haltestück 38 entfällt dort und as Schlagstück 37 ist direkt mit dem Außenrohr verbunden.

Im Falle eines ausreichend weichen Bodens kann der Sondenfuß 2 über die ersten Meter auch ohne eine Betätigung des Schlagwerks 36 nur durch die auf den Schlitten 35 mittels des Zugelements 39 ausgeübte Kraft eingedrückt werden.

Bei einer mehrere Außenrohrstücke 19 umfassenden Erdsonde werden diese im Zuge der Einbringung nacheinander miteinander verbunden, wobei auch die Innenrammstange 13 durch den Anbau weiterer Stangenrohrstücke 29 fortlaufend verlängert wird.

Das Außenrohr 1 besteht bevorzugterweise aus Kunststoff. Neben der Ausbildung als Glattrohr ist beispielsweise auch eine Ausbildung als Wellrohr, Noppenrohr usw. denkbar und möglich.

Das Innenrohr 17 besteht bevorzugterweise aus Kunststoff. Aber auch Kunststoffe, die Zusätze zur Erhöhung der mechanischen Festigkeit oder der Wärmeleitfähigkeit enthalten, Verbundwerkstoffe aus Kunststoff und Metall als auch korrosionsfreie Metalle sind als Materialien für das Außenrohr 1 denkbar und möglich. Neben einer Ausbildung als Glattrohr ist eine Ausbildung als Wellrohr, Noppenrohr, als Rohr mit sternförmig nach außen abstehenden zur Zentrierung dienenden Stegen usw. denkbar und möglich.

Als weitere Möglichkeit des Einschlagens des Sondenfußes 2 kann auch ein entsprechend schlank ausgeführtes Schlagwerk 42 in das Außenrohr 1 bis zum Sondenfuß 2 eingeführt werden, um direkt auf den Sondenfuß 2 schlagend (mit niedriger Frequenz rammend oder mit hoher Frequenz vibrierend) einzuwirken. Schlank ausgebildete Schlagwerke sind als Bodendurchschlagsraketen bekannt. In Fig. 9 ist ein solches Schlagwerk schematisch dargestellt. Am vorderen Ende des Gehäuses 43 befindet sich der die Schläge ausübende Schlagbolzen 44. Das Schlagwerk 42 ist an einer Stange 45 angebracht, um es durch das Außenrohr 1 bis zum Sondenfuß 2 einzuführen. Durch einen inneren Kanal 46 dieser Stange 45 kann beispielsweise zum Antrieb des Schlagwerks 42 dienende Druckluft zugeführt werden. Die Stange 45 kann vorzugsweise aus lösbar miteinander verbundenen Stangenstücken bestehen. Die Verbindung kann beispielsweise in analoger Weise wie bei der Innenrammstange 13 beschrieben ausgeführt sein, wobei im Verbindungsbereich zusätzlich ein Dichtungselement vorhanden sein kann.

Die Stange 45 erhöht vorteilhafterweise weiters die Rückstoßmasse für das Schlagwerk 42. Weiters kann von der Stange 45 in analoger Weise wie im Zusammenhang mit der Innenrammstange 13 erwähnt eine Führungsfunktion beim Vortrieb des Sondenfußes 2 und des Außenrohrs 1 übernommen werden. Weiters kann durch die entsprechend stabil ausgebildete Stange 45, beispielsweise aus einem dickwandigen Stahlrohr, ein Ausknicken des Außenrohrs 1 verhindert werden.

Auch kann die Stange 45 als Rückzugstange zum Zurückziehen des Schlagwerks 42 nach Abschluss des Einbringvorgangs herangezogen werden.

Die beschriebene Verbautechnik beruht wie dargestellt auf dem Verdrängungsverfahren. Der Verdrängerteil ist hierbei der Sondenfuß 2 bzw. ein Teil desselben. Günstigerweise wird das Erdreich durch die Verdrängung im unmittelbaren Umfeld der Erdsonde verdichtet, was zu einer Verbesserung des Wärmeübergangs führt.

Wenn die Erdsonde direkt, ohne vorgebohrtes Loch, in das Erdreich eingebracht wird, so fällt in Folge der Materialverdrängung kein Material zur Abfuhr oder Entsorgung an.

Günstigerweise kann die Aufweitung des Erdlochs gegenüber dem Außendurchmesser des Außenrohrs 1 relativ klein sein, sodass der zu verfüllende Ringraum vergleichsweise klein ist.

Das Verfahren eignet sich insbesondere für verdrängungsfähige, bindige Böden. Weitere Vorteile sind eine einfache und saubere Baustelle, kurze Rüstzeiten, ein geringer Platzbedarf und eine minimale Beeinträchtigung des Grundstücks. Die Arbeiten lassen sich mit kleiner, einfacher Gerätschaft ausführen. Das Verfahren ist wirtschaftlich, umweltgerecht und nachhaltig. Die Problematik der Durchörterung von mehreren Aquiferen wird vermieden.

### Legende

### zu den Hinweisziffern:

- 1: Außenrohr
- 2: Sondenfuß
- 3: Längsachse
- 4: Rohrstück
- 5: Dichtung
- 6: Dichtring
- 7: Fußplatte
- 8: Verdrängungsstück
- 9: Rohrfortsatz
- 10: Bund
- 11: Stirnfläche
- 12: Erdreich
- 13: Innenrammstange
- 14: Stützflüssigkeit
- 15: Beschwerungskappe
- 16: Füllmaterial
- 17: Innenrohr
- 18: Sondenkopf
- 19: Außenrohrstück
- 20: Dichtung
- 21: Rastzunge
- 22: Rastnase
- 23: Nut
- 24: Federring
- 25: Innenrohrstück
- 26: Rastzunge
- 27: Rastnase
- 28: Nut
- 29: Stangenstück
- 30: Zapfen
- 31: Verbindungsstück
- 32: Abschnitt
- 33: Zapfen
- 34: Führungsschiene
- 35: Schlitten
- 36: Schlagwerk
- 37: Schlagstück
- 38: Haltestück
- 39: Zugelement
- 40: Hohlraum
- 41: Stangenstück
- 42: Schlagwerk
- 43: Gehäuse
- 44: Schlagbolzen
- 45: Stange
- 46: Kanal
- 47: Passhülse

## Patentansprüche

1. Erdsonde zur Aufnahme von thermischer Energie aus dem Erdreich (12) und/oder zur Abgabe von thermischer Energie an das Erdreich (12), mit einem Außenrohr (1) und einem am unteren Ende des Außenrohrs (1) angeordneten und einen inneren Hohlraum (40) der Erdsonde verschließenden Sondenfuß (2), der in das Erdreich (12) eindrückbar und/oder einschlagbar ist, **dadurch gekennzeichnet, dass** der Sondenfuß (2) mit dem Außenrohr (1) in axialer Richtung des Außenrohrs (1) verschiebbar verbunden ist.

2. Erdsonde nach Anspruch 1, **dadurch gekennzeichnet, dass** der Sondenfuß (2) einen äußeren Durchmesser (D) aufweist, der größer ist als der Außendurchmesser (d) des Außenrohrs (2).

3. Erdsonde nach Anspruch 1 oder 2, **dadurch gekennzeichnet, dass** im Betriebszustand der Erdsonde zwischen dem Außenrohr (1) und dem Erdreich (12) ein Füllmaterial (16) eingebracht ist.

4. Erdsonde nach einem der Ansprüche 1 bis 3, **dadurch gekennzeichnet, dass** innerhalb des Außenrohrs (1) ein Innenrohr (17) verläuft und der Innenraum des Innenrohrs (17) und der Zwischenraum zwischen dem Innenrohr (17) und dem Außenrohr (1) Leitungen für ein Wärmeträgermedium bilden, die im Bereich des unteren Endes der Erdsonde miteinander verbunden sind.

5. Erdsonde nach einem der Ansprüche 1 bis 4, **dadurch gekennzeichnet, dass** das Außenrohr (1) mindestens zwei abgedichtet miteinander verbundene Außenrohrstücke (19) umfasst.

6. Erdsonde nach einem der Ansprüche 1 bis 5, **dadurch gekennzeichnet, dass** das Innenrohr (17) mindestens zwei miteinander verbundene Innenrohrstücke (25) umfasst.

7. Erdsonde nach einem der Ansprüche 1 bis 6, **dadurch gekennzeichnet, dass** die Verschiebbarkeit des Sondenfußes (2) gegenüber dem Außenrohr (1) durch Anschläge in beide Richtungen begrenzt ist.

8. Erdsonde nach einem der Ansprüche 1 bis 7, **dadurch gekennzeichnet, dass** der Sondenfuß (2) gegenüber dem Außenrohr (1) abgedichtet ist, wobei er vorzugsweise ein mittels mindestens einer Dichtung (5) abgedichtet gegenüber dem Außenrohr (1) verschiebbares Rohrstück (4) aufweist, das an seinem unteren Ende verschlossen ist.

9. Erdsonde nach Anspruch 8, **dadurch gekennzeichnet, dass** das Rohrstück (4) innerhalb des Außenrohrs (1) liegt.

10. Erdsonde nach Anspruch 8 oder 9, **dadurch gekennzeichnet, dass** das Rohrstück (4) an seinem unteren Ende durch eine Fußplatte (7) verschlossen ist, von der eine auf sie einwirkende Kraft auf ein Verdrängungsstück (8) des Sondenfußes (2) übertragbar ist.

11. Erdsonde nach Anspruch 10, **dadurch gekennzeichnet, dass** am Verdrängungsstück (8) ein Rohrfortsatz (9) angebracht ist, der in allen Verschiebepositionen des Sondenfußes (2) einen Endabschnitt des Außenrohrs (1) umgibt.

12. Verfahren zum Einbringen einer Erdsonde nach einem der Ansprüche 1 bis 11 in das Erdreich (12), **dadurch gekennzeichnet, dass** von innen her auf den Sondenfuß (2) drückend und/oder schlagend eingewirkt wird.

13. Verfahren nach Anspruch 12, **dadurch gekennzeichnet, dass** ein Innenrohr (17), dessen Innenraum eine Leitung für ein Wärmeträgermedium bildet, erst nachdem das Außenrohr (1) mit dem Sondenfuß (2) in das Erdreich (12) eingebracht worden ist, in das Außenrohr (1) eingesetzt wird.

14. Verfahren nach Anspruch 12 oder 13, **dadurch gekennzeichnet, dass** auf den Sondenfuß (2) mittels einer durch das Außenrohr (1) eingeführten Innenrammstange (13) eingewirkt wird, auf die an ihrem aus dem oberen Ende des Außenrohrs (2) herausragenden Ende drückend und/oder schlagend eingewirkt wird.

15. Verfahren nach Anspruch 14, **dadurch gekennzeichnet, dass** die Innenrammstange (13) mindestens zwei durch eine lösbare Verbindung verbundene Stangenstücke (29) umfasst.
